# EUROPEAN PATENT SPECIFICATION

(11) **EP 0 423 806 B1**
(45) Date of publication and mention of the grant of the patent: **10.08.1994**
(21) Application number: 90120058.4
(22) Date of filing: 19.10.1990
(51) Int. Cl.: D02J 1/22, D01F 6/60

(54) **High tenacity, high modulus polyamide yarn and process for making same**
Polyamidgarn mit hoher Festigkeit und hohem Modul
Fil de polyamide ayant une haute tenacité, et haut module

(30) Priority: 20.10.1989 US 424846
(43) Date of publication of application: 24.04.1991
(73) Proprietor: E.I. DU PONT DE NEMOURS AND COMPANY, Wilmington Delaware 19898 (US)
(72) Inventor: Clark, Thomas Russell III, Hixson, Tennessee 37343 (US); Cofer, Joseph Arnold, Jr., Hixson, Tennessee 37343 (US)
(74) Representative: Abitz, Walter, Dr.-Ing.

(56) References cited:
- EP-A- 0 085 972
- GB-A- 2 148 788
- US-E- 26 824

## Description

The present invention relates to industrial polyamide yarns and more particularly relates to very high tenacity polyamide yarn with high modulus and having acceptably low shrinkage and a process for making such yarns.

A wide variety of high tenacity polyamide yarns are known and are used commercially for a variety of purposes. Many of such polyamide yarns are useful in cords for tires and other applications due to high tenacity, i.e., up to but generally not exceeding 9.3 cN/dtex (10.5 g/d). Such yarns also have tolerable levels of shrinkage for conversion to selected industrial applications such as tire cords, typically 5-10% at 160°C. For most applications in which it is desirable to use a high tenacity yarn, yarns with a higher tenacity than that found in tire yarns would be desirable provided that shrinkage is controlled to low or moderate levels and modulus is kept high.

Low shrinkage yarns with high tenacity levels have been made using processes employing treatment steps such as steaming for relatively long periods after drawing but such processes are usually not well-suited for commercial production. In addition, the yarns made by such processes typically have greatly reduced modulus levels.

EP-A-0 085 972 describes a high tenacity fiber with a specified birefringence in section and other properties including dry heat shrinkage which needs only be less than 15 % to be within the scope of the invention. The examples illustrate shrinkages of 7.5 % and 8.3 %.

A polyamide yarn with a tenacity measured on a yarn basis of greater than about 9.7 cN/dtex (11 g/d) with an acceptable level of shrinkage and high modulus would be highly desirable for many industrial applications, particularly with other desirable properties including high sonic modulus and birefringence. Such yarns would be even more desirable if the yarns were readily manufactured in a commercially-feasible process.

### SUMMARY OF THE INVENTION

In accordance with the invention, a polyamide yarn is provided comprised of at least about 85% by weight of a polyamide selected from the group consisting of poly(hexamethylene adipamide) and poly(ε-caproamide) is provided which has a relative viscosity of greater than about 50, a tenacity of greater than about 9.7 cN/dtex (11.0 g/d), a dry heat shrinkage at 160°C of not more than about 6.5%, a boil-off shrinkage of less than about 7%, a modulus of at least about 31 cN/dtex (35 g/d), a birefringence of greater than about 0.060, a differential birefringence D: Δ_{90-.00} of greater than O, and a sonic modulus of greater than about 79 cN/dtex (90 g/d).

In accordance with a preferred form of the present invention, the yarn has a modulus of at least 35 cN/dtex (40 g/d), a crystal perfection index of greater than about 73 and a long period spacing of greater than about 100 Å. Most preferably the modulus of the yarn is greater than about 40 cN/dtex (45 g/d). Preferred yarns in accordance with the invention have a tenacity greater than about 10.1 cN/dtex (11.5 g/d) and an elongation to break of greater than about 15%. Values for normalized elastic range of greater than about 0.55 and a normalized yield stress of greater than about 0.78 are advantageously found in preferred yarns of the invention.

The novel high tenacity yarns in accordance with the invention provide tenacities of greater than about 9.7 cN/dtex (11.0 g/d) while also maintaining an excellent combination of other end-use characteristics including acceptably low shrinkage, i.e., a dry heat shrinkage of not more than about 6.5% at 160°C and a boil-off shrinkage of less than about 7%, and a high modulus level. In preferred yarns, a very high modulus level is provided as well as high values for normalized elastic range and normalized yield stress indicating that the external stress on the fiber is more uniformly distributed across the load bearing connector molecules than in known fibers.

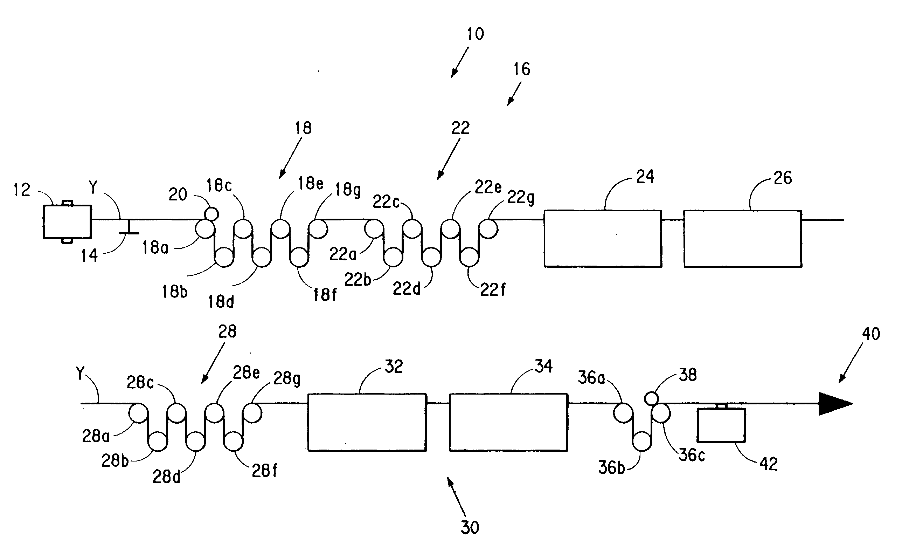

In accordance with the invention, a process is provided for making a polyamide yarn having a tenacity of greater than about 9.7 cN/dtex (11.0 g/d), a modulus of at least about 31 cN/dtex (35 g/d) and a dry heat shrinkage of not more than about 6.5% from a drawn, partially-drawn, or undrawn polyamide feed yarn. The process includes drawing the yarn in at least a final drawing stage while heating the feed yarn. The drawing and heating is continued until the draw tension reaches at least about 3.3 cN/dtex (3.8 g/d) when the yarn is heated to a yarn draw temperature of at least about 185°C preferably, at least about 190°C . The tension on the yarn is decreased after drawing sufficiently to allow the yarn to decrease in length to a maximum length decrease between about 2 and about 13.5%, preferably between about 2 and about 10%. During the carefully controlled tension reduction, the yarn is heated to a final yarn relaxation temperature of at least about 185°C, preferably at least about 190°C , when the maximum length decrease is reached.

In a preferred process, the decreasing of the tension is performed by decreasing the tension partially in at least an initial relaxation increment to cause an initial decrease in length and then further decreasing the tension to cause the yarn to decrease further in length to its maximum length decrease in at least a final relaxation increment. In a preferred process for poly(hexamethylene adipamide) yarns, the yarn relaxation temperature is attained by heating in an oven at a temperature between about 220 and about 320°C with residence time of the yarn in the oven between about 0.5 and about 1.0 seconds as the maximum length decrease is reached. In a preferred process for poly(ε-caproamide) yarns, the relaxation temperature is attained by heating in an oven at a temperature between about 220 and 300°C with residence time of the yarn in the oven between about 0.5 and about 1.0 seconds as the maximum length decrease is reached.

The process of the invention provides a commercially-feasible process in which a warp of multiple feed yarn ends can be converted to yarns with extremely high tenacity and low or moderate shrinkage. Feed yarns ranging from undrawn to "fully drawn" yarns can be used successfully in the process. When fully drawn yarns are used as feed yarns in the process, the tenacity can be increased to levels above about 9.7 cN/dtex (11 g/d) while maintaining other functional properties such as low or moderate shrinkage and high modulus. Undrawn or partially drawn feed yarns can similarly be converted to yarns with very high tenacity levels, high modulus and low or moderate shrinkages.

### BRIEF DESCRIPTION OF THE DRAWING

The Figure is a diagrammatical view of a process useful in making preferred yarns in accordance with the present invention.

### DETAILED DESCRIPTION

Polyamides useful for yarns in accordance with the invention include various linear, fiber-forming polycarbonamide homopolymers and copolymers being comprised of at least about 85% by weight of poly(hexamethylene adipamide) or poly(ε-caproamide). The polyamides have a relative viscosity of above about 50 on a formic acid basis, preferably above about 60, and are typically melt-spinnable to yield high tenacity fibers upon drawing. Preferably, the polyamide is homopolymer poly(hexamethylene adipamide) or poly(ε-caproamide), and most preferably is homopolymer poly(hexamethylene adipamide).

The tenacity of the yarns in accordance with the invention is greater than about 9.7 cN/dtex (11 g/d) when measured on a yarn basis enabling the yarns to be useful for a wide range of industrial applications including tires, hoses, belts, ropes, etc. Preferably, the yarn tenacity is greater than about 10.1 cN/dtex (11.5 g/d). In yarns of the invention, yarn tenacities can be as high as about 11.5 cN/dtex (13.0 g/d) or more. The modulus of the yarns is above about 31 cN/dtex (35 g/d), preferably is above about 35 cN/dtex (40 g/d), and most preferably is above about 40 cN/dtex (45 g/d). Modulus values of up to about 66 cN/dtex (75 g/d) or more are possible. The elongation to break is preferably above about 10%, more preferably is above about 14% and can be as high as about 30%.

The denier of the yarns will vary widely depending on the intended end use and the capacity of the equipment used to make the yarns. Typical deniers are, for example, on the order of 110-4400 dtex (100-4000 denier). The denier per filament (dpf) can also range widely but is generally between about 1.1 and about 33 dtex (1 and about 30 denier) for most industrial applications, preferably between about 3.3-7.8 dtex/fil (3 and about 7 dpf).

The dry heat shrinkage of the yarns of the invention is not more than about 6.5% at 160°C making the yarns particularly well-suited for applications where low to moderate shrinkage is desirable. In general, it is very difficult to decrease the dry heat shrinkage below about 2% and still maintain high tenacities above 11.0%. Thus, a preferred dry heat shrinkage range is between about 2 and about 6.5%. Boil-off shrinkages are low and are less than about 7%.

The yarns of the invention have a differential birefringence, D: Δ_{.90-.00}, of greater than 0. Differential birefringence as used herein means the difference in birefringence (Δ) between a point on the cross-section of a fiber of the yarn 0.9 of the distance from the center to the surface of the fiber (Δ_{.90}) and the center of the fiber (Δ_{.00}). It is preferable for the differential birefringence to remain at a very low level so that the surface and the core polymer of each fiber ofthe yarns can be drawn to essentially the same extent to maximize tensile properties. Thus, the differential birefringence should generally not be above about 0.003, preferably not above 0.002.

The combination of extremely high tenacity and low or moderate shrinkage in yarns in accordance with the invention, as well as other useful properties, are due to the novel fine structure of the fiber. The novel fine structure is characterized by a combination of properties including a crystal perfection index (CPI) greater than about 73. A long period spacing greater than about 100 Å is also characteristic of the fibers of the invention. A long period intensity (LPI) of greater than about 1.0 is observed in preferred yarns in accordance with the invention, more preferably LPI is at least 1.3. The apparent crystallite size (ACS) is greater than about 55 Å in the 100 plane for poly(hexamethylene adipamide) yarns. Yarns of the invention have a density of greater than about 1.143 g/cc. Yarns of the invention preferably have values of birefringence which are greater than about 0.06. The yarns have sonic modulus values which are greater than about 79 cN/dtex (90 g/d). Orientation angles of the yarns are greater than 10 degrees, preferably greater than 12 degrees.

It is believed that the fiber fine structure functions as follows to provide the combination of extremely high tenacity, low or moderate shrinkage and high modulus. In polyamide fibers, there are at least two phases which are functionally connected in series and which are responsible for fiber properties. One of these phases is crystalline and is made up of crystals which are effectively nodes in a highly one-dimensional molecular network. Connecting the crystals are noncrystalline polymer chain segments. The concentration (i.e. number per unit cross-sectional area) and uniformity of these connector molecules determines the ultimate fiber strength.

The very high values for normalized elastic range (greater than about .55), normalized yield stress (greater than about .78) and sonic modulus (greater than about 79 cN/dtex (90 g/d) indicate that the external stress on the fiber is highly uniformly distributed across the load bearing connector molecules. The levels attained for these parameters in the preferred yarns in accordance with the invention are far superior to measured values for commercially available polyamide industrial yarns.

Yarns in accordance with the invention can be produced from known polyamide yarns in a process in accordance with the invention which includes carefully controlled drawing and relaxation steps. The process is advantageously practiced using a warp of a multiplicity of feed yarn ends to improve economics relating to the production of the yarns of the invention.

As will become more apparent hereinafter, feed yarns for producing yarns of the invention can be "fully" drawn, partially drawn, or undrawn polyamide yarns. Good quality feed yarns, that is, yarns with few broken filaments, with low along-end denier variability, and comprised of polymer containing little or no nonessential materials such as delusterants or large spherulites are necessary for acceptable process continuity. "Fully" drawn is intended to refer to yarns having properties corresponding to yarns which are drawn to a high tenacity level for an intended end use in a commercially-practical manufacturing process. Typical commercially-available "fully" drawn yarns suitable for use as feed yarns have a tenacity of about 7.1-9.3 cN/dtex (8-10.5 g/d) and have a birefringence of about 0.050-0.060. Partially drawn and undrawn feed yarns are typically not widely available commercially but are well-known in the art. Partially drawn yarns have been drawn to some extent but generally are not useful without further drawing. Such partially drawn yarns typically have a birefringence of about 0.015-0.030. Undrawn is intended to refer to yarn which has been spun and quenched but has not been drawn subsequently to quenching. Typically, the birefringence of undrawn yarns is on the order of about 0.008.

Referring now to the Figure, apparatus 10 is illustrated which can be employed in a process of the invention to make yarns in accordance with the invention from "fully" drawn, partially drawn or undrawn feed yarns. While a single end process is shown and described hereinafter, the process is directly applicable to a multiple end process in which a warp of a multiplicity of feed yarns is employed to improve economy. With reference to the Figure, feed yarn Y is led from a supply package 12, passed through a suitable yarn tension control element 14, and enters a draw zone identified generally by the numeral 16.

In the draw zone 16, feed yarns are drawn while being simultaneously heated in at least a final draw stage as will become more apparent hereinafter. The drawing and heating is performed until a draw tension of at least about 3.3 cN/dtex (3.8 g/d) is applied to the yarn when the yarn has been heated to the yarn draw temperature of at least about 185°C, preferably at least about 190°C . As will be discussed hereinafter, the yarn temperature for poly(ε-caproamide) in the final draw stage should not be as high as those used for poly(hexamethylene adipamide). Thus, it is preferable for poly(ε-caproamide) yarns to be drawn under a tension of at least about 4.2 cN/dtex (4.8 g/d) in the final draw stage. To achieve this, different drawing steps, differing total draw ratios and different heating patterns are used for differing feed yarns. For example, a total draw of 5.5X or more with an initial unheated draw stage may be necessary for undrawn yarns while a draw of 1.1-1.3X may be suitable for "fully" drawn yarns. Partially drawn yarns may be drawn to some intermediate ratio. In the drawing of all the feed yarn types, the tenacity during the final draw stage, if measured, generally will increase to greater than the initial tenacity of a typical "fully" drawn yarn by about 10% to 30%, i.e., to greater than about 9.7 cN/dtex (11 g/d) to about 11.5 cN/dtex (13.0). In the final draw stage, the drawing is preferably performed in increments as the yarn is heated. Drawing can begin on heated rolls with a series of successive drawing steps. Due to the high temperatures to be reached when the draw tension is at least about 3.3 cN/dtex (3.8 g/d), non-contact heating of the yarn is preferred, preferably in an oven.

Referring again to the Figure, the drawing of the yarn Y in draw zone 16 of the process illustrated begins as the yarn passes in a serpentine fashion through a first set of seven draw rolls identified collectively as 18 and individually as 18a-18g. These rolls are suitably provided by godet rolls which have the capability of being heated such as by being internally-heated by the circulation of heated oil. In addition, the rotational velocity of the rolls is controlled to impart a draw of typically .5% to 1% to the yarn between each successive roll in the set of rolls to draw the yarn slightly and to maintain tight contact of the yarn with the rolls. The yarn Y is pressed against the first roll 18a by a nip roll 20 to prevent slippage.

Yarn Y is then forwarded to a second set 22 of seven draw rolls 22a-22g which are internally heated and the rotational velocity of which is controlled similarly to the first roll set 18. Typically, the rotational velocity of the rolls is controlled to impart a draw of typically .5% to 1% to the yarn between each successive roll in the set of rolls as in the first roll set. The velocity difference between the first roll set 18 and the second roll set 22 (between roll 18a and roll 22a) can be varied to draw the yarn as it advances between the sets of rolls. For undrawn feed yarns, a majority of the draw, e.g., 2.5-4.5X is usually performed in an initial "space" draw area between the first and second roll sets with only moderate or no heating of the first roll set 18. For "fully" drawn feed yarns, substantially no draw is typically imparted to the yarn between the first and second roll sets 18 and 22 and the first roll set 18 can be bypassed if desired although it is useful to run the yarn through the nip of rolls 18a and 20 to establish positive engagement of the yarn and avoid slippage during later drawing. Partially drawn yarns generally should be drawn as needed in the space draw zone so that the overall draw experienced by the yarns after space drawing is similar to or somewhat less than "fully" drawn feed yarns. Usually, for all feed yarns types, the second roll set 22 is used to heat the yarn by conduction in preparation for the final drawing at elevated temperature, e.g., roll temperatures of typically about 150-215°C.

After advancing past the second roll set 22, the yarn Y enters a heated draw area provided by two ovens, 24 and 26, respectively, which can be the forced hot air type with the capability to provide oven temperatures of at least about 300°C. The final draw stage which achieves the maximum draw of the process is performed in the heated draw area. The residence time and the temperature of the ovens is such that the yarn Y is heated to at least about 185°C , preferably, 190°C but the yarn temperature cannot exceed or approach the polyamide melting point too closely. To accomplish the heating effectively, the oven temperatures may exceed the yarn temperatures by as much as 130°C at typical process speeds. For poly(hexamethylene adipamide) yarns, preferred yarn temperatures are between about 190 and about 240°C and the oven temperatures are preferably between about 220 and about 320°C with a residence time of between about 0.5 and about 1.0 seconds. The melting point of poly(ε-caproamide) is lower and thus the yarn temperatures are preferably between about 190 and about 215°C. Preferred oven temperatures for poly(ε-caproamide) are between about 220 and about 300°C with a residence time of between about 0.5 and about 1.0 seconds. The draw in the heated draw area is determined by the speed of the first roll 22a of the second roll set 22 and the first roll 28a of the third roll set 28 (seven rolls 28a-28g) through which the yarn Y advances in a serpentine fashion after leaving the ovens 24 and 26. The total draw for the process is determined by the velocity of the first roll 18a in the first roll set and the speed of the first roll 28a in the third roll set. This first roll 28a in the third roll set marks the end of the draw zone 16 since, unlike the first and second roll sets, the velocity of successive rolls of roll set 28 decreases by between 0.5-1.0% as the yarn advances. Thus, a relaxation zone of the process, which is identified generally by the numeral 30, begins at roll 28a.

In the relaxation zone 30, the yarn is relaxed (the tension is decreased in a controlled fashion and the yarn is allowed to decrease in length) by between about 2 and about 13.5%, preferably between about 2 and about 10%. The yarn is heated during the relaxation so that a final yarn relaxation temperature of above about 185°C , preferably at least about 190°C is reached. To assist in maintaining high yarn tenacity and modulus during relaxation, a tension of above about 0.35 cN/dtex (0.4 g/d.) should be maintained on the yarn.

The relaxation is preferably performed in increments as the yarn is relaxed. The initial relaxation can be performed on heated rolls and advantageously is a series of successive relaxation steps within the initial relaxation increment. Due to the high temperatures necessary during the final relaxation increment, non-contact heating of the yarn in an oven is preferred.

As illustrated in the Figure, the relaxation is performed initially by the incremental relaxation on the third roll set 28 which is heated to about 150-215°C. The yarn then passes through relaxation ovens 32 and 34 capable of providing oven temperatures of at least about 300°C. Achieving the necessary final relaxation temperature depends on the oven temperature and residence time of the yarn in the ovens. Preferably, the ovens contain air at temperatures in excess of the yarn temperature by as much as about 130°C for effective heating at reasonable process speeds. For poly(hexamethylene adipamide) yarns, preferred yarn temperatures are between about 190 and about 240°C and the oven temperatures are preferably between about 220 and about 320°C with a residence time of between about 0.5 and about 1.0 seconds. The melting point of poly(ε-caproamide) is lower and thus the yarn temperatures are preferably between about 190 and about 215°C. Preferred oven temperatures for poly(ε-caproamide) are between about 220 and about 300°C with a residence time of between about 0.5 and about 1.0 seconds.

After the yarn passes through the ovens 32 and 34, yarn Y then passes through a fourth roll set 36 of 3 rolls (36a-36c) in a serpentine fashion with the yarn Y being pressed against the last roll 36c by nip roll 38 to prevent slippage. The surfaces of the fourth roll set 36 can be internally cooled with chilled water to assist in reducing the yarn temperature to a level suitable for windup. The yarn is retensioned slightly on roll 36c in order to produce a stable running yarn and avoid wraps on roll 36b. The total relaxation is thus determined by the velocity difference between the first roll 28a of the third roll set 28 and the first roll 36a of the fourth roll set 36.

After leaving the relaxation zone 30 of the process, the yarn Y is fed through a yarn surface treatment zone 40 which can include an interlace jet (not shown) to commingle the yarn filaments, a finish applicator 42 to apply a yarn finish or other treatments to the yarn. At a wind-up station (not shown), the multiple ends of yarn Y are wound up onto suitable packages for shipping and end use.

In a process in accordance with the invention using apparatus as illustrated for a warp of multiple ends, preferred wind-up speeds are from 150 mpm to 750 mpm.

The following examples illustrate the invention and are not intended to be limiting. Yarn properties were measured in accordance with the following test methods. Percentages are by weight unless otherwise indicated.

### TEST METHODS

Conditioning: Packaged yarns were conditioned before testing for at least 2 hours in a 55% ±2% relative humidity, 74°F ±2°F (23°C ±1°C) atmosphere and measured under similar conditions unless otherwise indicated.

Relative Viscosity: Relative viscosity refers to the ratio of solution and solvent viscosities measured in a capillary viscometer at 25°C. The solvent is formic acid containing 10% by weight of water. The solution is 8.4% by weight polyamide polymer dissolved in the solvent.

Denier: Denier or linear density is the weight in grams of 9000 meters of yarn. Denier is measured by forwarding a known length of yarn, usually 45 meters, from a multifilament yarn package to a denier reel and weighing on a balance to an accuracy of .001 g. The denier is then calculated from the measured weight of the 45 meter length.

Tensile Properties: Tensile properties (Tenacity, Elongation at break and Modulus) are measured as described by Li in U.S. Patent No. 4,521,484 at col. 2, 1.61 to col. 3, 1.6, the disclosure of which is hereby incorporated by reference.

Initial modulus is determined from the slope of a line drawn tangential to the "initial" straightline portion of the stress strain curve. The "initial" straightline portion is defined as the straightline portion starting at 0.5% of full scale load. For example, full scale load is 222N (50.0 pounds) for 670-1550 dtex (600-1400) denier yarns; therefore the "initial" straightline portion of the stress-strain curve would start at 1.1N (0.25 lbs). Full scale load is 450N (100 pounds) for 2000-2200 dtex (1800-2000) denier yarns and the initial straightline portion of the curve would start at 2.2N (0.50 lbs).

Dry Heat Shrinkage: Dry heat shrinkage is measured on a Testrite shrinkage instrument manufactured by Testrite Ltd. Halifax, England. A ^{∼}24" (61 cm) length of multifilament yarn is inserted into the Testrite and the shrinkage recorded after 2 minutes at 160°C under a 0.05 g/d load. Initial and final lengths are determined under the 0.05 g/d load. Final length is measured while the yarn is at 160°C.

Boil-off Shrinkage: After stripping the surface yarn off a yarn package and discarding, one meter samples of yarn are conditioned relaxed for between 14 and 24 hours at 55% RH and 75°F . Each sample is then tied into a loop and its original length determined under a 1.0g./tex (0.111 g/denier) load. The samples are placed in a cheesecloth bag and then into a bath of boiling water for 30 minutes. After removing the samples from the bath, they are centrifuged. The loop samples are then removed from the cheesecloth bags, dried in a forced air oven at 65°C. for one hour, and reconditioned at 55% RH/75°F /4-24 hrs. The final sample length is determined under a 1.0 g./tex load. 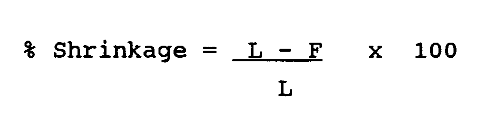
Where L = original loop length.
F = final loop length.

Birefringence and Differential Birefringence: The optical parameters of the fibers of this invention are measured according to the method described in Frankfort and Knox U.S. 4,134,882 beginning at column 9, line 59 and ending at column 10, line 65, the disclosure of which is incorporated by reference, with the following exceptions and additions. First, instead of Polaroid T-410 film and 1000X image magnification, high speed 35mm film intended for recording oscilloscope traces and 300X magnification are used to record the interference patterns. Also suitable electronic image analysis methods which give the same result can also be used. Second, the word "than" in column 10, line 26 is replaced by the word "and" to correct a typographical error.

Because the fibers of this invention are different from those of 4,134,882, a different parameter, calculated from the same n|| and n⊥ distributions at ±.05 ... ±.95 of the distance from center to edge of the fiber image, is needed to characterize them. Here the + refers to opposite sides from the center of the fiber image. The birefringence Δ at each point (i) [where i goes from -.95 to +.95] in the image is determined the same way as in the reference. In this case the desired structure parameter is the difference in Δ between the center of the image and the point .90 of the distance from the center to the edge. The birefringence at the center of the image for any filament Δ(.00) is defined as the average of the birefringence at the two points corresponding with i = ±.05:

$\text{Δ(.00) = (Δ(-.05)+Δ(.05))/2}$

Similarly, for either side of the image corresponding with i = ±.90, the birefringence Δ(+.90) is defined by:
Δ(±.90) = (Δ(±.95)+Δ(±.85))/2, where the plus sign is used for one side of the image and the minus sign for the other. The differential birefringence D:Δ_{.90-.00} is then defined by:

${\text{D:Δ}}_{\text{.90-.00}} \text{= [Δ(+.90)+Δ(-.90)]/2 - Δ(.00)}$

### X-Ray Parameters

### Crystal Perfection Index and Apparent Crystallite Size:

Crystal perfection index and apparent crystallite size are derived from X-ray diffraction scans. The diffraction pattern of fibers of these compositions is characterized by two prominent equatorial X-ray reflections with peaks occurring at scattering angle approximately 20°-21° and 23°2ϑ.

X-ray diffraction patterns of these fibers are obtained with an X-ray diffractometer (Philips Electronic Instruments, Mahwah, N.J., cat. no. PW1075/00) in reflection mode, using a diffracted-beam mono-chromator and a scintillation detector. Intensity data are measured with a rate meter and recorded by a computerized data collection/reduction system. Diffraction patterns are obtained using the instrumental settings:
Scanning Speed 1° 2ϑ per minute;
Stepping Increment 0.025° 2ϑ;
Scan Range 6° to 38°, 2ϑ; and
Pulse Height Analyzer, "Differential".
For both Crystal Perfection Index and Apparent Crystallite Size measurements, the diffraction data are processed by a computer program that smoothes the data, determines the baseline, and measures peak locations and heights.

The X-ray diffraction measurement of crystallinity in 66 nylon, 6 nylon, and copolymers of 66 and 6 nylon is the Crystal Perfection Index (CPI) (as taught by P. F. Dismore and W. O. Statton, J. Polym. Sci. Part C, No. 13, pp. 133-148, 1966). The positions of the two peaks at 21° and 23° 2ϑ are observed to shift; as the crystallinity increases, the peaks shift farther apart and approach the positions corresponding to the "ideal" positions based on the Bunn-Garner 66 nylon structure. This shift in peak location provides the basis of the measurement of Crystal Perfection in 66 nylon: 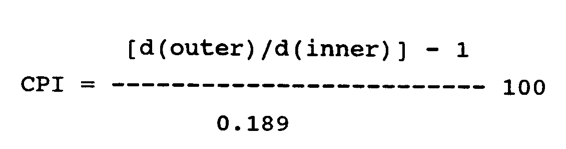
where d(outer) and d(inner) are the Bragg 'd' spacings for the peaks at 23° and 21° respectively, and the denominator 0.189 is the value for d(100)/d(010) for well-crystallized 66 nylon as reported by Bunn and Garner (Proc. Royal Soc.(London), A189, 39, 1947). An equivalent and more useful equation, based on ϑ values, is:

$\text{CPI = [2ϑ(outer)/2ϑ(inner) - 1] x 546.7}$

Because 6 nylon has a different crystallographic unit cell, the factor for well-crystallized 6 nylon is different, and the equation is:

$\text{CPI = [2ϑ(outer)/2ϑH(inner) - 1] x 509.8}$

Apparent Crystallite Size: Apparent crystallite size is calculated from measurements of the half-height peak width of the equatorial diffraction peaks. Because the two equatorial peaks overlap, the measurement of the half-height peak width is based on the half-width at half-height. For the 20°-21° peak, the position of the half-maximum peak height is calculated and the 2ϑ value for this intensity is measured on the low angle side. The difference between this 2ϑ value and the 2ϑ value at maximum peak height is multiplied by two to give the half-height peak (or "line") width. For the 23° peak, the position of the half-maximum peak height is calculated and the 2ϑ value for this intensity is measured on the high angle side; the difference between this 2ϑ value and the 2ϑ value at maximum peak height is multiplied by two to give the half-height peak width.

In this measurement, correction is made only for instrumental broadening; all other broadening effects are assumed to be a result of crystallite size. If 'B' is the measured line width of the sample, the corrected line width 'beta' is

$\text{β=√} \overline{\text{B} \text{²} \text{-b} \text{²}}$

where 'b' is the instrumental broadening constant. 'b' is determined by measuring the line width of the peak located at approximately 28° 2ϑ in the diffraction pattern of a silicon crystal powder sample.

The Apparent Crystallite Size (ACS) is given by $\text{ACS = (Kλ)/(β cos ϑ),}$ wherein
K is taken as one (unity);
λ is the X-ray wavelength (here 1.5418 Å);
β is the corrected line breadth in radians; and
ϑ is half the Bragg angle (half of the ϑ value
of the selected peak, as obtained from the diffraction pattern).

X-ray Orientation Angle: A bundle of filaments about 0.5 mm in diameter is wrapped on a sample holder with care to keep the filaments essentially parallel. The filaments in the filled sample holder are exposed to an X-ray beam produced by a Philips X-ray generator (Model 12045B) available from Philips Electronic Instruments. The diffraction pattern from the sample filaments is recorded on Kodak DEF Diagnostic Direct Exposure X-ray film (Catalogue Number 154-2463), in a Warhus pinhole camera. Collimators in the camera are 0.64 mm in diameter. The exposure is continued for about fifteen to thirty minutes (or generally long enough so that the diffraction feature to be measured is recorded at an Optical Density of ^{∼}1.0). A digitized image of the diffraction pattern is recorded with a video camera. Transmitted intensities are calibrated using black and white references, and gray level (0-255) is converted into optical density. The diffraction pattern of 66 nylon, 6 nylon, and copolymers of 66 and 6 nylon has two prominent equatorial reflections at 2ϑ approximately 20°-21° and 23°; the outer (^{∼}23°) reflection is used for the measurement of Orientation Angle. A data array equivalent to an azimuthal trace through the two selected equatorial peaks (i.e. the outer reflection on each side of the pattern) is created by interpolation from the digital image data file; the array is constructed so that one data point equals one-third of one degree in arc.

The Orientation Angle (OA) is taken to be the arc length in degrees at the half-maximum optical density (angle subtending points of 50 percent of maximum density) of the equatorial peaks, corrected for back-ground. This is computed from the number of data points between the half-height points on each side of the peak (with interpolation being used, this is not an integral number). Both peaks are measured and the Orientation Angle is taken as the average of the two measurements.

Long Period Spacing and Normalized Long Period Intensity: The long period spacing (LPS), and long period intensity (LPI), are measured with a Kratky small angle diffractometer manufactured by Anton Paar K.G., Graz, Austria. The diffractometer is installed at a line-focus port of a Philips XRG3100 X-ray generator equipped with a long fine focus X-ray tube operated at 45KV and 40ma. The X-ray focal spot is viewed at a 6 degree take-off angle and the beam width is defined with a 120 micrometer entrance slit. The copper K-alpha radiation from the X-ray tube is filtered with a 0.7 mil nickel filter and is detected with a NaI(TI) Scintillation counter equipped with a pulse height analyzer set to pass 90% of the CuK-alpha radiation symmetrically.

The nylon samples are prepared by winding the fibers parallel to each other about a holder containing a 2 cm diameter hole. The area covered by the fibers is about 2 cm by 2.5 cm and a typical sample contains about 1 gram of nylon. The actual amount of sample is determined by measuring the attenuation by the sample of a strong CuK-alpha X-ray signal and adjusting the thickness of the sample until the transmission of the X-ray beam is near 1/e or .3678. To measure the transmission, a strong scatterer is put in the diffracting position and the nylon sample is inserted in front of it, immediately beyond the beam defining slits. If the measured intensity without attenuation is Io and the attenuated intensity is I, then the transmission T is I/(Io). A sample with a transmission of 1/e has an optimum thickness since the diffracted intensity from a sample of greater or less thickness than optimum will be less than that from a sample of optimum thickness.

The nylon sample is mounted such that the fiber axis is perpendicular to the beam length (or parallel to the direction of travel of the detector). For a Kratky diffractometer viewing a horizontal line focus, the fiber axis is perpendicular to the table top. A scan of 180 points is collected between 0.1 and 4.0 degrees 2ϑ, as follows: 81 points with step size 0.0125 degrees between 0.1 and 1.1 degrees; 80 points with step size 0.025 degrees between 1.1 and 3.1 degrees; 19 points with step size 0.05 degrees between 3.1 and 4.0 degrees. The time for each scan is 1 hour and the counting time for each point is 20 seconds. The resulting data are smoothed with a moving parabolic window and the instrumental background is subtracted. The instrumental background, i.e. the scan obtained in the absence of a sample, is multiplied by the transmission, T, and subtracted, point by point, from the scan obtained from the sample. The data points of the scan are then corrected for sample thickness by multiplying by a correction factor, $\text{CF = -1.0/(eT In(T))}$ . Here e is the base of the natural logarithm and In(T) is the natural logarithm of T. Since T is less than 1, In(T) is always negative and CF is positive. Also, if $\text{T=1/e}$ , then $\text{CF=1}$ for the sample of optimum thickness. Therefore, CF is always greater than 1 and corrects the intensity from a sample of other than optimum thickness to the intensity that would have been observed had the thickness been optimum. For sample thicknesses reasonably close to optimum, CF can generally be maintained to less than 1.01 so that the correction for sample thickness can be maintained to less than a percent which is within the uncertainty imposed by the counting statistics.

The measured intensities arise from reflections whose diffraction vectors are parallel to the fiber axis. For most nylon fibers, a reflection is observed in the vicinity of 1 degree 2ϑ. To determine the precise position and intensity of this reflection, a background line is first drawn underneath the peak, tangent to the diffraction curve at angles both higher and lower than the peak itself. A line parallel to the tangent background line is then drawn tangent to the peak near its apparent maximum but generally at a slightly higher 2ϑ value. The 2ϑ value at this point of tangency is taken to be the position since it is position of the maximum if the sample back-ground were subtracted. The long period spacing, LPS, is calculated from the Bragg Law using the peak position thus derived. For small angles this reduces to:

$\text{LPS = λ/sin(2ϑ)}$

The intensity of the peak, LPI, is defined as the vertical distance, in counts per second, between the point of tangency of the curve and the background line beneath it.

The Kratky diffractometer is a single beam instrument and measured intensities are arbitrary until standardized. The measured intensities may vary from instrument to instrument and with time for a given instrument because of X-ray tube aging, variation in alignment, drift, and deterioration of the scintillation crystal. For quantitative comparison among samples, measured intensities were normalized by ratioing with a stable, standard reference sample. This reference was chosen to be a "fully drawn" nylon 66 identified as T-717 and commercially available from E. I. du Pont de Nemours and Company, Wilmington Delaware.

Sonic Modulus: Sonic Modulus is measured as reported in Pacofsky U.S. Patent No. 3,748,844 at col. 5, lines 17 to 38, the disclosure of which is incorporated by reference except that the fibers are conditioned for 24 hours at 70°F (21°C) and 65% relative humidity prior to the test and the nylon fibers are run at a tension of 0.1 grams per denier rather than the 0.5-0.7 reported for the polyester fibers of the referenced patent.

Density: Density of the polyamide fiber is measured by use of the density gradient column technique described in ASTM D150556-68 using carbon tetrachloride and heptane liquids at 25°C.

Tension: While the process is running, tension measurements are made in the draw and relax zones (in the Figure, after oven 26 in the draw zone and after oven 34 in the relaxation zone about 12 inches (30 cm) from the exits of the ovens) using model Checkline DXX-40, DXX-500, DXX-1K and DXX-2K hand-held tensiometers manufactured by Electromatic Equipment Company, Inc., Cedarhurst, N.Y. 11516.

Yarn Temperature: Yarn Temperatures are measured after the yarn leaves draw oven 26 and relaxation oven 34 with the measurements made about 4 inches (10 cm) away from the oven exit. The measurements are made with a non-contact infrared temperature measurement system comprised of an infrared optical scanning system with a 7.9 micron filter (band pass of about 0.5 microns) and broad band detector to sense the running yarn and a temperature reference blackbody placed behind the yarn which can be precisely heated to temperatures up to 300°C. A type J thermocouple, buried in the reference, is used with a Fluke Model 2170A digital indicator traceable to National Bureau Standards to measure the reference temperature. Highly accurate measurement of the temperature of polyamide yarn is obtained since the 7.9 micron filter corresponds to an absorption band where the emissivity is known to be close to unity. In practice, the temperature of the reference is adjusted so that the yarn line scan image disappears as viewed on an oscilloscope and, at this null point, the yarn will be at the same temperature as the reference.

Normalized Elastic Range and Normalized Yield Stress: To characterize structural strength, cohesion, elasticity, and stiffness of fiber building blocks in high quality yarns, the Normalized Elastic Range and Normalized Yield Stress are measured from high speed stress-strain curves of single filaments, selected at random from a yarn sample.

The Elastic Range is determined from the stress-strain traces as the range of stress over the linear portion of the trace, between the initial and secondary points of deflection -- the latter designated as yield points.

This region of linearity is defined as the segment of the stress-strain trace with a constant slope, between the stress hardening point, where the slope of the trace begins to increase due to successive engagement of more load-bearing structural fiber elements, and the yield point where they begin to disengage or fail. The end points of this segment are easily defined as the points where the recorded trace of the line segment deviates, by ^{∼}1% of the break stress, from a tangent straight line --drawn with a fine pen or pencil, in width not exceeding that of the recorded trace.

The Elastic Range is calculated as the stress difference between these two points. The Normalized Elastic Range is calculated as a dimension-less fraction (Elastic Range divided by the breaking stress of the filament). This avoids any uncertainties due to denier variance and denier errors.
{The breaking stress is defined as the maximum stress recorded before the abrupt (or gradual) downturn of the recorded stress-strain plot. Tenacity is defined as the ratio of break stress divided by denier.}
The Yield Stress is defined by the stress at the upper end point of this Elastic Range ( = linear portion of the stress-strain trace cited above) signifying beginning plastic flow prior to break. The Normalized Yield Stress is calculated as the Yield Stress divided by the break stress of the filament, giving again a dimension-less ratio, which characterizes the mechanical fiber structures and the quality of their connections.

All samples were run on an Instron tensile tester with 1.3 cm (0.5) inch gauge length and 833%/min. elongation rate. The samples were conditioned for 24 hrs. at 21° (70°F.) and 65% RH prior to measurement. To achieve the required precision, at least 10 good breaks, preferably 20, are made and recorded. Measurements are made on all good traces -- eliminating jaw breaks, obvious slippage, etc. -- and the averaged values of Elastic Range, Yield Stress, Normalized Elastic Range and Normalized Yield Stress are reported.

### Example 1

A fully drawn 941 dtex (848 denier) 140 filament yarn with a formic acid relative viscosity of about 67 was prepared by continuous polymerization and extrusion of poly(hexamethylene adipamide) and drawn using the process of Good, U.S. Patent 3,311,691. This fully drawn yarn with 8.5 cN/dtex (9.6 gpd) tenacity and 8.8% shrinkage (Feed Yarn 1) is more fully described in Table 2.

Using apparatus as illustrated in the Figure operated using the process conditions listed in Table 1, the yarn was taken off a feed package 12 over end, forwarded to the tension control element 14 for tension control, and then nipped by nip roll 20 and godet roll 18a of roll set 18. The godet rolls 18b through 18g of roll set 18 were bypassed and the yarn was forwarded directly to godet rolls 22a-22g of roll set 22, through ovens 24 and 26 to roll set 28. The draw tension after oven 26 was 4.14 cN/dtex (4.69 g/d) at a yarn temperature of 233°C. The yarn then passes through all seven rolls of roll set 28, through ovens 32 and 34, and through the rolls of roll set 36 before wind-up. The yarn temperature of the yarn emerging from relaxation oven 34 was 240°C and the relaxation percentage was 8.7%. Incremental draws of 0.5% were used between each pair of rolls in roll set 22 and incremental relaxations of 0.5% were used between each pair of rolls in the third roll set 28. A detailed list of process parameters including roll speeds and oven and roll temperatures is provided in Table 1.

The yarn thus obtained had a tenacity, dry heat shrinkage, and modulus balance of 9.9 cN/dtex (11.2 g/d), 2.9%, and 40.9 cN/dtex (46.3 g/d), respectively. The connector molecules in the fiber are uniformly distributed to better support external stresses as evidenced by 0.64 normalized elastic range and 0.87 normalized yield stress. This high tenacity product combined with excellent dimensional stability results from a combination of structural parameters including high 0.0622 birefringence and 95.1 gpd sonic modulus. A complete list of properties are shown in Table 2.

### Example 2

A fully drawn 1400 dtex (1260 denier) 210 filament yarn with formic acid relative viscosity of about 67 was prepared by continuous polymerization and extrusion of polyhexamethylene adipamide and drawn using the process of Good, U.S. Patent 3,311,691. This fully drawn yarn with 8.6 cN/dtex (9.7 gpd) tenacity and 7.7% shrinkage (Feed Yarn 2) is more fully described in Table 2.

Feed yarn 2 was then drawn and relaxed as in Example 1 using the apparatus illustrated in the Figure and the conditions described in Table 1. The draw tension was 3.57 cN/dtex (4.05 g/d) at a yarn temperature of 219°C. The temperature of the yarn emerging from relaxation oven 34 was 219°C and the relaxation percentage was 8.6%. The process speeds and roll and oven temperatures and other parameters are shown in Table 1.

The yarn thus obtained had a tenacity and dry heat shrinkage balance of 11.6 g/d and 3.2%, respectively. The connector molecules in the fiber are uniformly distributed to better support external stresses as evidenced by 0.61 normalized elastic range and 0.82 normalized yield stress. This high tenacity product combined with excellent dimensional stability results from a combination of structural parameters including high 0.0623 birefringence and 83.2 cN/dtex (94.3 g/d) sonic modulus. A complete list of properties are shown in Table 2.

### Example 3

A fully drawn 1400 dtex (1260 denier) 210 filament yarn with formic acid relative viscosity of about 89 was prepared by continuous polymerization and extrusion of polyhexamethylene adipamide and drawn using the process of Good, U.S. Patent 3,311,691. This fully drawn yarn with 8.8 cN/dtex (10.0 gpd) tenacity and 7.6% shrinkage (Feed Yarn 3) is more fully described in Table 2.

Feed yarn 3 was then drawn and relaxed as in Example 1 using the apparatus illustrated in the Figure and the conditions described in Table 1. The draw tension was 4.65 cN/dtex (5.27 g/d) at a yarn temperature of 212°C. The temperature of the yarn emerging from relaxation oven 34 was 219°C. and the relaxation percentage was 7.4. The process speeds, roll and oven temperatures and other process parameters are shown in Table 1.

The yarn thus obtained had a tenacity, dry heat shrinkage and modulus balance of 12.1 gpd, 5.2%, and 46.6 cN/dtex (52.8 g/d), respectively. The connector molecules in the fiber are uniformly distributed to better support external stresses as evidenced by 0.71 normalized elastic range and 0.90 normalized yield stress. This high tenacity product combined with good dimensional stability results from a combination of structural parameters including high 0.0622 birefringence and 83.9 cN/dtex (95.1 g/d) sonic modulus. A complete list of properties are shown in Table 2.

### Example 4

The feed yarn for example 4 was the same as that described in Example 3. A sample of feed yarn 3 was drawn and relaxed as in Example 1 using the apparatus illustrated in the Figure and the conditions described in Table 1. The draw tension was 4.40 cN/dtex (4.98 g/d) at a yarn temperature of 212°C. The temperature of the yarn emerging from relaxation oven 34 was 219°C and the relaxation percentage was 13.3%. The process speeds, roll and oven temperatures and other process parameters are shown in Table 1.

The yarn thus obtained had a tenacity, dry heat shrinkage, and modulus balance of 9.80 cN/dtex (11.1 g/d), 2.0%, and 3.64 cN/dtex (41.2 g/d), respectively. The connector molecules in the fiber are uniformly distributed to better support external stresses as evidenced by 0.62 normalized elastic range and 0.82 normalized yield stress. This high tenacity product combined with excellent dimensional stability results from a combination of structural parameters including high 0.0605 birefringence and 81.6 cN/dtex (92.5 g/d) sonic modulus. A complete list of properties are shown in Table 2.

### Example 5

A direct spun 4440 dtex (4000 denier) 140 filament yarn with a formic acid relative viscosity of 64 was prepared by continuous polymerization and extrusion of poly(hexamethylene adipamide). After extrusion the yarn was quenched, treated with an oiling agent and wound up directly at 402 mpm (440 ypm). The birefringence of the spun yarn was about 0.008. The yarn was subsequently stored at 65% RH for 48 hours to achieve near equilibrium moisture content of about 4.5%. The yarn was taken off the feed package 12 over end and forwarded to friction element 14 for tension control at 65 g. The yarn was drawn 3.28X between godet roll 18a of draw roll set 18 and godet roll 22a of draw roll set 22 and drawn 1.798X between godet roll 22g of draw roll set 22 and godet roll 28a of roll set 28. The yarn temperature after oven 26 was 226°C. The yarn was relaxed at 2.6% between godet roll 28g of roll set 28 and godet roll 36a of roll set 36. Incremental draws of 0.5% were used between each pair of rolls in draw roll sets 18 and 22 and incremental relaxations of 0.5% were used between each pair of rolls in roll set 28. The temperature of the yarn emerging from relaxation oven 34 was 226°C and the relaxation was 2.6%. The yarn was wound up at 120 g winding tension. The process conditions are given in Table 1.

The yarn thus obtained had a tenacity, dry heat shrinkage and modulus balance of 10.6 cN/dtex (12 g/d), 6.5% and 66.5 cN/dtex (75.4 g/d), respectively. The connector molecules in the fiber are uniformly distributed to better support external stresses as evidenced by 0.68 normalized elastic range and 0.87 normalized yield stress. This high tenacity product combined with good dimensional stability results from a combination of structural parameters including high 0.0639 birefringence and 91.5 cN/dtex (103.7 g/d) sonic modulus. A complete list of properties are shown in Table 2.

### Example 6

The feed yarn for Example 6 was the same as that described in Example 3. A sample of feed yarn 3 was drawn and relaxed as in Example 1 using the apparatus illustrated in the Figure and the conditions described in Table 1. The draw tension was 5.52 cN/dtex (6.26 g/d) at a yarn temperature of 212°C. The temperature of the yarn emerging from relaxation oven 34 was 219°C and the relaxation percentage was 5.6%. The process speeds, roll and oven temperatures and other process parameters are shown in Table 1.

The yarn thus obtained had a tenacity, dry heat shrinkage, and modulus balance of 10.7 cN/dtex (12.1 g/d), 6.0%, and 51 cN/dtex (58 g/d), respectively. The connector molecules in the fiber are uniformly distributed to better support external stresses as evidenced by 0.73 normalized elastic range and 0.90 normalized yield stress. This high tenacity product combined with good dimensional stability results from a combination of structural parameters including high 0.0606 birefringence and 82 cN/dtex (92.9 g/d) sonic modulus. A complete list of properties are shown in Table 2.

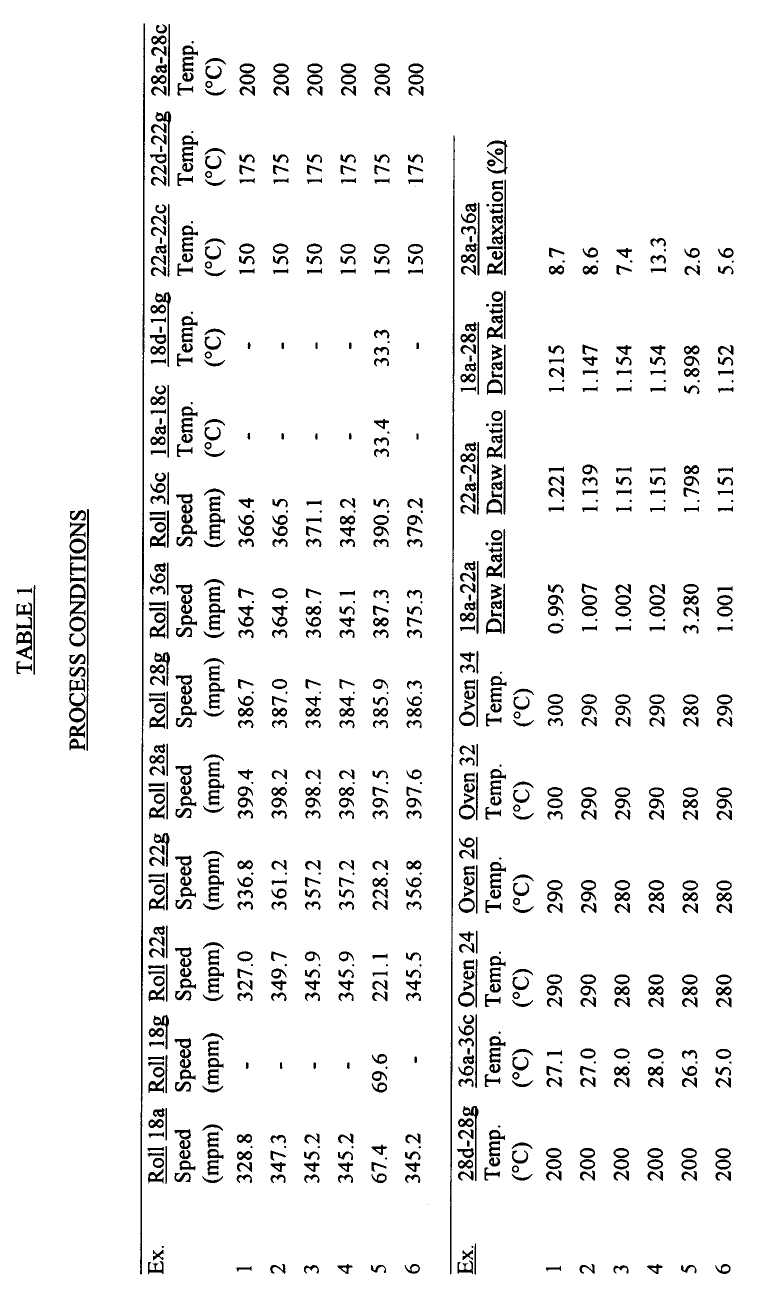

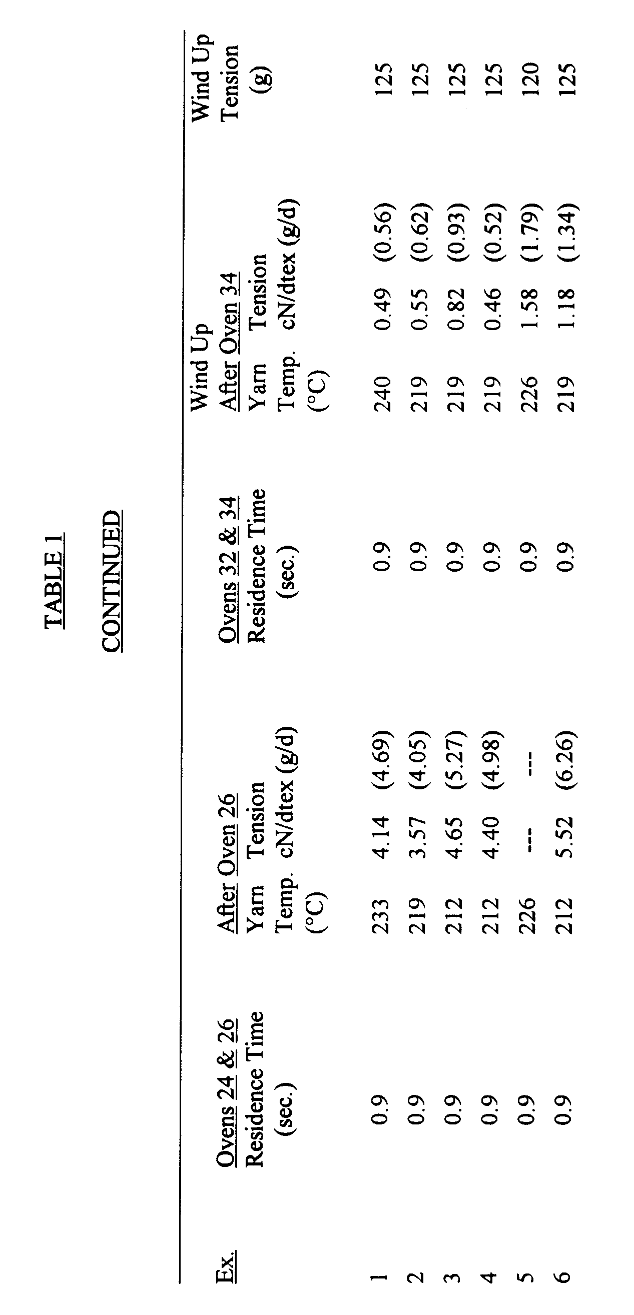

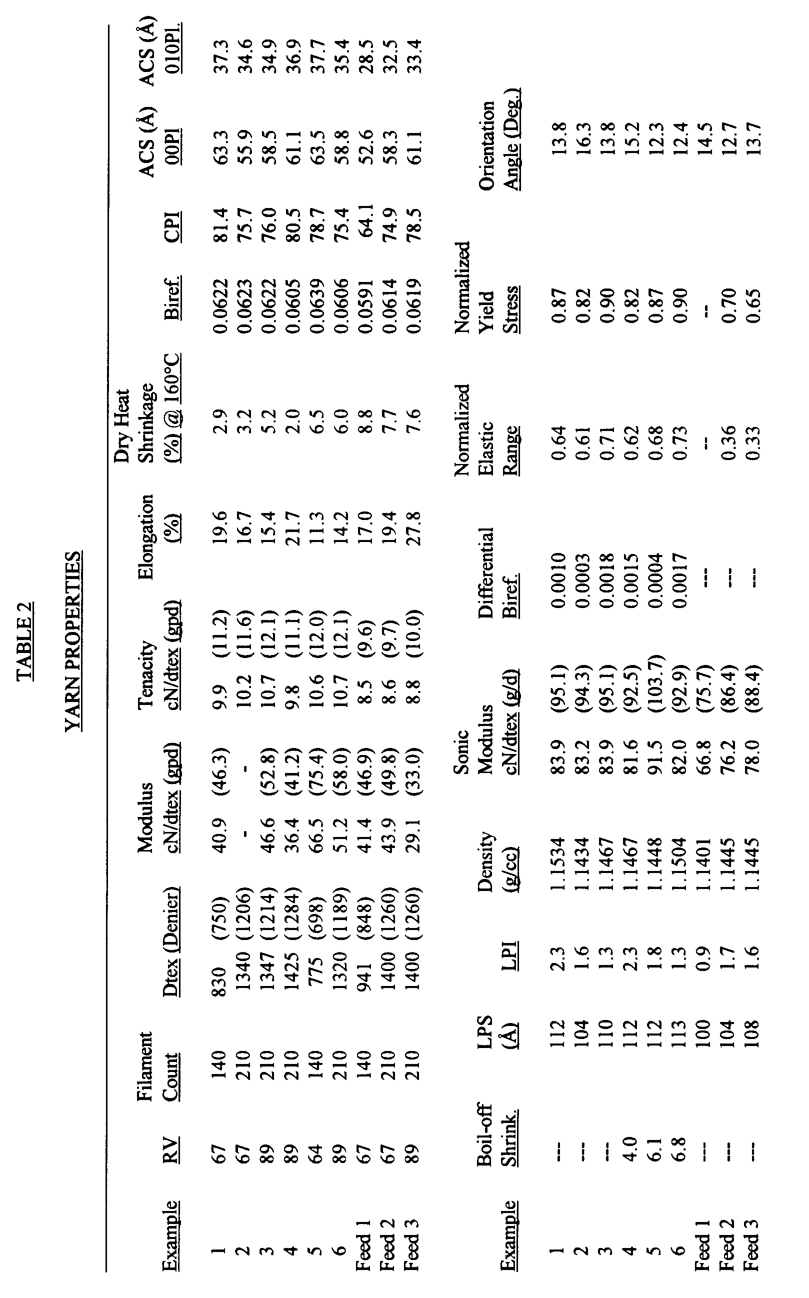

## Claims

1. A polyamide yarn comprised of a polyamide having a formic acid relative viscosity of greater than about 50, said polyamide comprising at least about 85% by weight of a polyamide selected from the class consisting of poly(hexamethylene adipamide) and poly(ε-caproamide), said yarn having a tenacity of greater than about 9.7 cN/dtex (11.0 g/d), a dry heat shrinkage at 160°C of not more than about 6.5%, a boil-off shrinkage of less than about 7%, a modulus of at least about 31 cN/dtex (35 g/d), a birefringence of greater than about 0.060, a differential birefringence, D:Δ_{.90-.00}, of greater than 0, and a sonic modulus of greater than about 79 cN/dtex (90 g/d).

2. The yarn of Claim 1 having a modulus of greater than about 35 cN/dtex (40 g/d).

3. The yarn of Claim 2 having a modulus of greater than about 40 cN/dtex (45 g/d).

4. The yarn of Claim 1 having a long period spacing of greater than about 100 Å.

5. The yarn of Claim 1 wherein said tenacity is greater than about 10.1 cN/dtex (11.5 g/d).

6. The yarn of claim 1 having a crystal perfection index of greater than about 73.

7. The yarn of Claim 1 having an elongation to break of at least about 10%.

8. The yarn of Claim 1 having an elongation to break of at least about 14%.

9. The yarn of Claim 1 wherein said relative viscosity is greater than about 60.

10. The yarn of Claim 1 wherein said polyamide is comprised of homopolymer poly(hexamethylene adipamide).

11. The yarn of Claim 10 having an apparent crystallite size of greater than about 53 Å as measured in the 100 plane.

12. The yarn of Claim 1 wherein said yarn has a normalized elastic range of greater than about 0.55.

13. The yarn of Claim 1 wherein said yarn has a normalized yield stress of greater than about 0.78.

14. The yarn of claim 1 having a density of at least 1.143 g/cc.

15. A process for making a polyamide yarn having a tenacity of at least about 9.7 cN/dtex (11.0 g/d), a dry heat shrinkage at 160° of not more than about 6.5%, and a modulus of at least about 31 cN/dtex (35 g/d) from a feed yarn selected from the class consisting of drawn, partially-drawn and undrawn polyamide yarns, said process comprising:
drawing said feed yarn in at least a final draw stage;
heating said feed yarn during at least said final draw stage;
said drawing and heating of said feed yarn being continued until the draw tension reaches at least about 3.3 cN/dtex (3.8 g/d) when said yarn is heated to a yarn draw temperature of at least about 185°C;
decreasing the tension on said yarn after said drawing sufficiently to allow said yarn to decrease in length to a maximum length decrease between about 2 and about 13.5%;
heating said yarn during said decreasing of said tension to a yarn relaxation temperature of at least about 185°C when said maximum length decrease is reached; and
cooling and packaging said yarn after said decreasing of said tension.

16. The process of claim 15 wherein said tension is decreased sufficiently and said yarn is heated to cause a maximum length decrease between about 2 and about 10%.

17. The process of claim 15 wherein said yarn is heated during said drawing to 190°C when said tension is at least about 3.3 cN/dtex (3.8 g/d).

18. The process of claim 15 wherein said yarn is heated during said decreasing of said tension to at least about 190°C when said maximum length decrease is reached.

19. The process of claim 15 wherein said decreasing of the tension is performed by decreasing the tension partially in at least an initial relaxation increment to cause an initial decrease in length and then further decreasing the tension to cause said yarn to decrease further in length to its maximum length decrease in at least a final relaxation increment.

20. The process of claim 15 performed on a multiplicity of yarn ends simultaneously at a packaging speed between 150 and 750 mpm.

21. The process of claim 15 wherein said feed yarn is a partially-drawn or undrawn feed yarn and said drawing further comprises at least one initial draw stage before said final draw stage.

22. The process of claim 15 wherein said polyamide is at least about 85% by weight poly(hexamethylene adipamide) and said yarn draw temperature is between about 190 and about 240°C and said yarn relaxation temperature is between about 190 and about 240°C.

23. The process of claim 22 wherein said heating during said drawing is performed in an oven having a temperature of between about 220 and about 320°C, the residence time in said oven being between about 0.5 and about 1.0 seconds.

24. The process of claim 22 wherein said heating during said decreasing of the tension is performed in an oven having a temperature of between about 220 and about 320°C, the exposure time of said yarn in said oven being between about 0.5 and about 1.0 seconds.

25. The process of claim 15 wherein said polyamide is at least about 85% by weight poly(ε-caproamide) and said yarn draw temperature is between about 185 and about 215°C and said yarn relaxation temperature is between about 185 and about 215°C.

26. The process of claim 25 wherein said heating during said drawing is performed in an oven having a temperature between about 220 and 300°C , the exposure time in said oven being between about 0.5 and about 1.0 seconds.

27. The process of claim 25 wherein said heating during said decreasing of the tension is performed in an oven having a temperature of between about 220 and about 300°C , the exposure time of said yarn in said oven being between about 0.5 and about 1.0 seconds.

## Patentansprüche

1. Polyamidgarn, welches ein Polyamid aufweist, welches eine relative Viskosität in Ameisensäure von größer als etwa 50 hat, wobei das Polyamid wenigstens etwa 86 Gew.-% als Polyamid aufweist, welches aus der Gruppe gewählt ist, die Poly(Hexamethylen Adipamid) und Poly(ε-Caproamid) umfaßt, wobei das Garn eine Festigkeit von größer als etwa 9,7 cN/dtex (11,0 g/d), eine Trockenwärmeschrumpfung bei 160°C von nicht größer als etwa 6,5 %, eine Verdampfungsschrumpfung von weniger als etwa 7 %, einen Modul von wenigstens etwa 31 cN/dtex (35 g/d), eine Doppelbrechung von größer als etwa 0,060, eine differentielle Doppelbrechung von D:Δ_{.90-.00} von größer als 0, und einen Ultraschallmodul von größer als etwa 79 cN/dtex (90 g/d). hat.

2. Garn nach Anspruch 1, welches einen Modul von größer als etwa 35 cN/dtex (40 g/d) hat.

3. Garn nach Anspruch 2, welches einen Modul von größer als etwa 40 cN/dtex (45 g/d) hat.

4. Garn nach Anspruch 1, welches einen großen Periodenabstand von nicht größer als etwa 100 Å hat.

5. Garn nach Anspruch 1, bei dem die Festigkeit größer als etwa 10,1 cN/dtex (11,5 g/d) ist.

6. Garn nach Anspruch 1, welches einen Kristallvollständigkeitsindex von größer als etwa 73 hat.

7. Garn nach Anspruch 1, welches eine Bruchdehnung von wenigstens etwa 10 % hat.

8. Garn nach Anspruch 1, welches eine Bruchdehnung von wenigstens etwa 14 % hat.

9. Garn nach Anspruch 1, bei dem die relative Viskosität größer als etwa 60 ist.

10. Garn nach Anspruch 1, bei dem das Polyamid ein Homopolymer Poly(hexamethylen Adipamid) aufweist.

11. Garn nach Anspruch 10, welches eine Rohkristallgröße von größer als etwa 53 Å gemessen in der Ebene 100 hat.

12. Garn nach Anspruch 1, bei dem das Garn einen normierten, elastischen Bereich von größer als etwa 0,55 hat.

13. Garn nach Anspruch 1, bei dem das Garn eine normierte Streckspannung von größer als etwa 0,78 hat.

14. Garn nach Anspruch 1, welches eine Dicke von wenigstens 1,143 g/cc hat.

15. Verfahren zum Herstellen eines Polyamidgarns, welches eine Festigkeit von wenigstens etwa 9,7 cN/dtex (11,0 g/d), eine Trockenwärmeschrumpfung bei 160° von nicht mehr als etwa 6,5 % und einen Modul von wenigstens etwa 31 cN/dtex (35 g/d) hat aus einem Zufuhrgarn, welches aus der Klasse gewählt ist, welche gestreckte, teilgestreckte und ungestreckte Polyamidgarne umfaßt, wobei das Verfahren folgendes aufweist:
Strecken des Zufuhrgarns in wenigstens einer Endstreckstufe;
Erwärmen des Zufuhrgarns während wenigstens der Endstreckstufe;
das Strecken und Erwärmen des Zufuhrgarns fortgesetzt werden, bis die Streckspannung wenigstens etwa 3,3 cN/dtex (3,8 g/d) erreicht, wenn das Garn auf eine Garnstrecktemperatur von wenigstens etwa 185°C erwärmt wird;
Herabsetzen der Zugspannung auf das Garn nach dem Strecken auf eine derart ausreichende Weise, daß ermöglicht wird, daß das Garn in der Länge auf eine maximale Länge abnimmt, welche zwischen etwa 2 und etwa 13,5 % liegt;
Erwärmen des Garns während der Herabsetzung der Spannung auf eine Garnrelaxationstemperatur von wenigstens etwa 185°C, wenn die maximale Längenabnahme erreicht ist; und
Kühlen und Abpacken des Garns nach der Zugspannungsverminderung.

16. Verfahren nach Anspruch 15, bei dem die Spannung in ausreichender Weise herabgesetzt wird, und das Garn erwärmt wird, um eine maximale Längenabnahme zwischen etwa 2 und etwa 10 % zu bewirken.

17. Verfahren nach Anspruch 15, bei dem das Garn während des Streckens auf 190°C erwärmt wird, wenn die Spannung wenigstens etwa 3,3 cN/dtex (3,8 g/d) beträgt.

18. Verfahren nach Anspruch 15, bei dem das Garn während der Abnahme der Spannung auf wenigstens etwa 190°C erwärmt wird, wenn die maximale Längenabnahme erreicht ist.

19. Verfahren nach Anspruch 15, bei dem die Abnahme der Spannung dadurch erfolgt, daß die Spannung teilweise in wenigstens einem Anfangsrelaxationsinkrement herabgesetzt wird, um zu bewirken, daß eine Anfangsabnahme der Länge bewirkt wird, und daß dann die Spannung weiter herabgesetzt wird, um zu bewirken, daß das Garn weiter in der Länge auf die maximale Längenabnahme in wenigstens einem abschließenden Relaxationsinkrement abnimmt.

20. Verfahren nach Anspruch 15, welches bei einer Mehrzahl von Garnenden gleichzeitig bei einer Abpackgeschwindigkeit zwischen 150 und 750 mpm durchgeführt wird.

21. Verfahren nach Anspruch 15, bei dem das Zufuhrgarn ein teilgestrecktes oder ungestrecktes Zufuhrgarn ist, und daß das Strecken ferner wenigstens eine Anfangstreckstufe vor der abschließenden Streckstufe aufweist.

22. Verfahren nach Anspruch 15, bei dem das Polyamid wenigstens etwa 85 Gew.-% Poly(Hexamethylen Adipamid) hat, und bei dem die Garnstrecktemperatur zwischen etwa 190 und etwa 240°C liegt, und die Garnrelaxationstemperatur zwischen etwa 190 und etwa 240°C liegt.

23. Verfahren nach Anspruch 22, bei dem die Erwärmung während des Streckens in einem Ofen erfolgt, welcher eine Temperatur zwischen etwa 220 und etwa 320°C hat, und die Verweilzeit im Ofen zwischen etwa 0,5 und etwa 1,0 Sekunden liegt.

24. Verfahren nach Anspruch 22, bei dem die Erwärmung während der Spannungsabnahme in einem Ofen vorgenommen wird, welcher eine Temperatur zwischen etwa 220 und etwa 320°C hat, und die Einwirkzeit auf das Garn im Ofen zwischen etwa 0,5 und etwa 1,0 Sekunden liegt.

25. Verfahren nach Anspruch 15, bei dem das Polyamid wenigstens etwa 85 Gew.-% Poly(ε-Caproamid) aufweist, und die Garnstrecktemperatur zwischen etwa 185 und etwa 215°C liegt, und die Garnrelaxationstemperatur zwischen etwa 185 und etwa 215°C liegt.

26. Verfahren nach Anspruch 25, bei dem die Erwärmung während des Streckens in einem Ofen erfolgt, welcher eine Temperatur zwischen etwa 220 und 300°C hat, und die Einwirkzeit im Ofen zwischen etwa 0,5 und etwa 1,0 Sekunden liegt.

27. Verfahren nach Anspruch 25, bei dem die Erwärmung während der Spannungsabnahme in einem Ofen erfolgt, welcher eine Temperatur zwischen etwa 220 und etwa 300°C hat, und die Einwirkzeit auf das Garn im Ofen zwischen etwa 0,5 und 1,0 Sekunden liegt.

## Revendications

1. Un fil de polyamide consistant en un polyamide présentant une viscosité relative dans l'acide formique supérieure à environ 50, ledit polyamide comprenant au moins environ 85% en poids d'un polyamide poly(ε-caproamide), ledit fil présentant une ténacité d'au moins environ 9,7 cN/dtex (11,0 g/d), un rétrécissement après ébullition inférieur à environ 7%, un module d'au moins environ 31 cN/dtex (35 g/d), une biréfringence supérieure à environ 0,060, une biréfringence différentielle, D/Δ.90-.00, supérieure à 0, et un module sonique supérièur à environ 79 cN/dtex (90 g/d).

2. Le fil selon la revendication 1 ayant un module supérieur à environ 35 cN/dtex (40 g/d).

3. Le fil selon la revendication 2 ayant un module supérieur à environ 40 cN/dtex (45 g/d).

4. Le fil selon la revendication 1 ayant un espacement de période longue supérieur à environ 100 Å.

5. Le fil selon la revendication 1 dans lequel ladite ténacité est supérieure à environ 10.1 cN/dtex (11,5 g/d).

6. Le fil selon la revendication 1 ayant un indice de perfection cristalline supérieur à environ 73.

7. Le fil selon la revendication 1 ayant un allongement à la rupture d'au moins environ 10 %.

8. Le fil selon la revendication 1 ayant un allongement à la rupture d'au moins environ 14 %.

9. Le fil selon la revendication 1 dans lequel ladite viscosité relative est supérieure à environ 60.

10. Le fil selon la revendication 1 dans lequel ledit polyamide est constitué d'un homopolymère de poly(hexamethylène adipamide).

11. Le fil selon la revendication 10 ayant une dimension apparente de crystallite supérieure à environ 53 Å comme mesuré dans le plan 100.

12. Le fil selon la revendication 1 dans lequel ledit fil a un intervalle élastique normalisé supérieur à environ 0,55.

13. Le fil selon la revendication 1 dans lequel ledit fil a une limite de contrainte normalisée supérieure à environ 0,78.

14. Le fil selon la revendication 1 ayant une densité d'au moins 1,143 g/cc.

15. Un procédé de la fabrication d'un fil de polyamide ayant une ténacité d'au moins 9,7 cN/dtex (11,0 g/d) à un rétrécissement à chaud et à sec de 160°C qui ne dépasse pas environ 6,5 %, et un module d'au moins 31 cN/dtex (35 g/d) à partir d'un fil à traiter choisi dans la classe constituée par des fils étirés partiellement étirés et non étirés de polyamide, ce procédé consistant :
- à étirer ledit fil à traiter dans au moins une étape finale d'étirage;
- à chauffer ledit fil à traiter pendant au moins ladite étape finale d'étirage;
ledit étirage et chauffage dudit fil à traiter étant poursuivi jusqu'à ce que la tension d'étirage atteigne au moins 3,3 cN/dtex (3,8 g/d) lorsque ledit fil est chauffé à une température d'étirage du fil d'au moins 185°C;
- à diminuer la tension exercée sur ledit fil après ledit étirage suffisamment pour permettre audit fil de diminuer de longueur jusqu'à une diminution maximum de longueur comprise entre environ 2 et environ 13,5%;
- à chauffer ledit fil pendant ladite diminution de ladite tension jusqu'à une température de relaxation du fil d'au moins 185°C lorsque ladite diminution maximum est atteinte; et à refroidir et à conditionner ledit fil après ladite diminution de ladite tension.

16. Le procédé selon la revendication 15 dans lequel ladite tension est diminuée suffisamment et ledit fil est chauffé pour occasionner une diminution maximum de longueur comprise entre environ 2 et environ 10%.

17. Le procédé selon la revendication 15 dans lequel ledit fil est chauffé pendant ledit étirage à 190°C lorsque ladite tension est au moins égale à environ 3,3 cN/dtex (3,8 g/d),

18. Le procédé selon la revendication 15 dans lequel ledit fil est chauffé pendant ladite diminution de ladite tension jusqu'à au moins 190°C lorsque ladite diminution maximum de longueur est atteinte.

19. Le procédé de la revendication 15 dans lequel ladite diminution de tension est mise en oeuvre par diminution partielle de la tension au moins avec un incrément initial de relaxation pour occasionner une diminution initiale de longueur et ensuite à poursuivre la diminution de la tension pour amener ce fil à diminuer encore de longueur jusqu'à une diminution maximum de longueur avec au moins un incrément final de relaxation.

20. Le procédé selon la revendication 15 mis en oeuvre sur une multiplicité de brins de fils simultanément avec une vitesse de conditionnement comprise entre 150 et 750 mpm.

21. Le procédé selon la revendication 15 dans lequel ledit fil à traiter est un fil à traiter partiellement étiré ou non étiré cet étirage comprend de plus au moins une étape initiale d'étirage avant ladite étape finale d'étirage.

22. Le procédé selon la revendication 15 dans lequel ledit polyamide représente au moins environ 85% en poids du polyhexamethylène adipamide et ladite température d'étirage du fil est comprise entre environ 190 et environ 240°C et ladite température de relaxation du fil est comprise entre environ 190 et environ 240°C.

23. Le procédé selon la revendication 22 pendant lequel ledit chauffage pendant ledit étirage est mis en oeuvre dans un four ayant une température comprise entre environ 220 et environ 320°C, le temps de séjour dans ledit four étant compris entre environ 0,5 et environ 1,0 seconde.

24. Le procédé selon la revendication 22 dans lequel ledit chauffage pendant ladite diminution de tension est mis en oeuvre dans un four ayant une température comprise entre environ 220 et environ 320°C, le temps d'exposition dudit fil dans ledit four étant compris entre 0,5 et environ 1,0 seconde.

25. Le procédé selon la revendication 15 dans lequel ledit polyamide représente au moins environ 85% en poids du poly(ε-caproamide) et ladite température d'étirage du fil est comprise entre 185 environ et 215°C environ et ladite température de relaxation du fil est comprise entre environ 185 et environ 215°C.

26. Le procédé selon la revendication 25 dans lequel ledit chauffage pendant ledit étirage est mis en oeuvre dans un four ayant une température comprise entre environ 220 et 300°C, le temps d'exposition dans ce four étant compris entre environ 0,5 et environ 1,0 seconde.

27. Le procédé selon la revendication 25 dans lequel ledit chauffage pendant ladite diminution de tension est mis en oeuvre dans un four ayant une température comprise entre environ 220 et environ 300°C, le temps d'exposition dudit fil dans ledit four étant compris entre 0,5 et environ 1,0 seconde.
